# EUROPÄISCHE PATENTSCHRIFT

(11) **EP 3 559 703 B1**
(45) Veröffentlichungstag und Bekanntmachung des Hinweises auf die Patenterteilung: **17.02.2021**
(21) Anmeldenummer: 17832911.6
(22) Anmeldetag: 19.12.2017
(51) Int. Cl.: G01S 19/41, G01S 19/34

(54) **VORRICHTUNG UND VERFAHREN ZU EINER VERBESSERTEN POSITIONSBESTIMMUNG EINES FAHRZEUGS**
DEVICE AND METHOD FOR DETERMINING THE POSITION OF A VEHICLE IN AN IMPROVED MANNER
DISPOSITIF ET PROCÉDÉ DE DÉTERMINATION DE LA POSITION D'UN VÉHICULE AMÉLIORÉE

(30) Priorität: 22.12.2016 DE 102016226052
(43) Veröffentlichungstag der Anmeldung: 30.10.2019
(73) Patentinhaber: Continental Teves AG & Co. OHG, 60488 Frankfurt am Main (DE)
(72) Erfinder: STÄHLIN, Ulrich, Oakland Township, Michigan 48306 (US)
(74) Vertreter: Wagner, Philipp
(86) Internationale Anmeldenummer: PCT/DE2017/200138
(87) Internationale Veröffentlichungsnummer: WO 2018/113858

(56) Entgegenhaltungen:
- DE-A1- 19 643 675
- DE-A1-102007 036 497
- JP-A- 2001 124 841
- US-A1- 2005 083 230

## Beschreibung

### TECHNISCHES GEBIET

Die vorliegende Erfindung betrifft eine Vorrichtung und ein Verfahren zu einer verbesserten Positionsbestimmung eines Fahrzeugs.

### STAND DER TECHNIK

### Moderne Fahrzeuge sind häufig mit sogenannten

Fahrzeugpositionsbestimmungsvorrichtungen wie zum Beispiel Navigationssystemen ausgerüstet, um dem Fahrer eine aktuelle Position seines Fahrzeugs bereitzustellen, damit es für den Fahrer einfacher ist, sich in einem für ihn unbekannten Umgebung zurecht zu finden. Derartige Navigationssysteme sind aus dem Stand der Technik hinlänglich bekannt. Das Grundprinzip derartiger Systeme basiert darauf, Signale, wie zum Beispiel ein GPS-Signal, das von einem Satelliten an ein Fahrzeug gesendet wird, derart zu verarbeiten, dass eine Fahrzeugposition bestimmt werden kann, welche vorzugsweise kontinuierlich aktualisiert wird. Dazu ist eine Kommunikation zwischen dem Satelliten und dem Navigationssystem erforderlich. Zur Bestimmung einer Fahrzeugposition umfasst ein derartiges Navigationssystem ein sogenanntes GNSS (Global Navigation Satellite System) - Empfangsmodul.

Die Qualität von derartigen Navigationssystemen für ein Fahrzeug hängt dabei in erster Linie von der Genauigkeit der bestimmten Fahrzeugposition ab. Ein wesentlicher Faktor, der die Genauigkeit einer Bestimmten Fahrzeugposition beeinflusst, ist der Zustand oder die Zusammensetzung der Atmosphäre zwischen dem Satelliten und dem Fahrzeug, denn dadurch werden maßgeblich die Laufzeiten der Signale zwischen dem Satelliten und dem Fahrzeug beeinflusst. Eine Beeinflussung der Signallaufzeiten hat eine Auswirkung auf die gemessene Entfernung des Fahrzeugs zu dem Satelliten, welche wiederum zur Positionsbestimmung des Fahrzeugs benötigt wird. Der Einfluss der Atmosphäre durch sogenannte atmosphärische Effekte trägt also maßgeblich dazu bei, mit welcher Genauigkeit eine Fahrzeugposition bestimmt werden kann oder anders formuliert, mit welchem Fehler die zu ermittelnde Fahrzeugposition ausgegeben wird.

Um den Einfluss dieser atmosphärischen Effekte auf die Positionsbestimmung eines Fahrzeugs durch ein Navigationssystem zu kompensieren, ist es, wie in der DE 10 2007 036 497 A1 und der DE 196 43 675 A1 beschrieben, gegenwärtig üblich, bei der Positionsbestimmung eines Fahrzeugs durch ein Navigationsgerät zusätzliche Daten zu verwenden, welche den Einfluss dieser atmosphärischen Effekte und damit den Fehler aufgrund dieser Effekte kompensieren oder zumindest reduzieren. Diese zusätzlichen Daten basieren überwiegend auf einem mathematisch ermittelbaren Fehlerkorrekturmodell, um den Einfluss dieser atmosphärischen Effekte im Voraus abschätzen und damit berücksichtigen zu können. Die Genauigkeit einer zu bestimmenden Fahrzeugposition hängt dabei im Wesentlichen von der Qualität dieser zusätzlichen Daten und des verwendeten Fehlerkorrekturmodells ab. Ein Nachteil, der die Verwendung dieser zusätzlichen Daten einschränkt, ist die Tatsache, dass derartige Daten oftmals nur von kommerziellen Anbietern bereitgestellt werden, so dass man einen bestimmten Grad einer Genauigkeit einer Positionsangabe nur durch den Erwerb dieser kostenpflichtigen Daten erhält.

### BESCHREIBUNG DER ERFINDUNG

Es ist daher Aufgabe der vorliegenden Erfindung eine Vorrichtung und ein Verfahren bereitzustellen, das die Genauigkeit bei einer Positionsbestimmung eines Fahrzeugs unter Berücksichtigung von atmosphärischen Effekten und zu geringen Kosten verbessert.

Erfindungsgemäß wird diese Aufgabe durch die Merkmale der unabhängigen Patentansprüche gelöst. Vorteilhafte Ausführungsformen der vorliegenden Erfindung sind Gegenstand der abhängigen Ansprüche, der Beschreibung sowie der Figuren.

Gemäß einem ersten Aspekt betrifft die Erfindung eine Vorrichtung zur Verwendung in einem Fahrzeug zum Empfangen und Verarbeiten von ersten Daten während einer Parkposition des Fahrzeugs, wobei die ersten Daten zur Bestimmung einer Entfernung zwischen mindestens einem Satelliten und dem Fahrzeug geeignet sind und Fehler bei einer Positionsbestimmung des Fahrzeugs aufgrund atmosphärischer Effekte berücksichtigen, und wobei die ersten Daten von mindestens einem Satelliten erzeugt werden, wobei der mindestens eine Satellit ausgebildet ist, die ersten Daten an das Fahrzeug zu senden, wobei die Vorrichtung für den Zeitabschnitt, während dem sich das Fahrzeug in der Parkposition befindet, die von dem Satelliten bereitgestellten und erzeugten ersten Daten in definierten Zeitintervallen empfängt, mit einer ersten Kommunikationsschnittstelle, wobei die erste Kommunikationsschnittstelle ausgebildet ist, die ersten Daten von dem mindestens einen Satelliten zu empfangen, einem Controller, welcher ausgebildet ist, mit der ersten Kommunikationsschnittstelle verbindbar zu sein, um erste Daten von der ersten Kommunikationsschnittstelle zur Verarbeitung zu empfangen, und wobei der Controller ferner ausgebildet ist, auf der Basis der empfangenen ersten Daten, zumindest einen Parameter für die Erstellung eines Fehlerkorrekturmodells zur Korrektur eines Positionsfehlers bei der Bestimmung einer Position für das Fahrzeug zu bestimmen.

Das Fahrzeug kann ein Kraftfahrzeug, insbesondere ein Personenkraftfahrzeug, ein Lastkraftfahrzeug, ein Motorrad, eine Elektrokraftfahrzeug oder ein Hybridkraftfahrzeug sein.

Die ersten Daten sind vorzugsweise Messdaten, welche von einem Satelliten erzeugt wurden.

Die grundlegende Idee hinter der vorliegenden Erfindung besteht darin, dass sich die atmosphärischen Effekte nur sehr langsam verändern. Für den Zeitraum oder den Zeitabschnitt, während dem sich das Fahrzeug in einer Parkposition befindet, empfängt die erfindungsgemäße Vorrichtung die von dem Satelliten bereitstellten und erzeugten ersten Daten in definierten und vorzugsweise regelmäßigen Zeitintervallen.

Mit diesen ersten Daten, die Informationen über eine Laufzeit eines Signales von dem mindestens einen Satelliten zum Fahrzeug enthalten, kann von dem Controller die jeweilige Entfernung des Fahrzeugs zu dem mindestens einen Satelliten bestimmt werden. Die Messung der ersten Daten durch die erfindungsgemäße Vorrichtung, die den Controller beinhaltet erfolgt dabei in bestimmten Zeitabschnitten, die derart aufeinander abgestimmt sind, dass sich Fehler bei der Signallaufzeitbestimmung der Signale zwischen Satelliten und Fahrzeug aufgrund von atmosphärischer Effekte schließlich erkennen lassen. Insbesondere weil das Fahrzeug sich in einer Parkposition befindet und sich dessen Position also für einen relativ langen Zeitraum nicht verändert, können Abweichungen in der Signallaufzeitmessungen bei der Aufnahme von einer Vielzahl von ersten Daten, die sich in den ersten Daten wiederspiegeln, von dem Controller erkannt und entsprechend interpretiert werden.

Diese ersten Daten werden dann als Basis für den Controller verwendet, um zumindest einen Parameter für die Erstellung eines Fehlerkorrekturmodells zu erstellen, welches fortlaufend optimiert und verbessert wird. Dieses Fehlerkorrekturmodell bzw. deren Parameter für die Erstellung eines derartigen Fehlerkorrekturmodells kann dann von einem Navigationssystem oder einem Lokalisierungssystem zu einer optimierten Ermittlung einer Fahrzeugposition verwendet werden. Je genauer dieses Fehlerkorrekturmodell ausgebildet ist, desto genauer wird die zu bestimmende Fahrzeugposition - vorzugsweise durch ein Navigationssystem oder ein Lokalisierungssystem - ausfallen, das heißt, diese wird mit einem geringeren (Positions-)Fehler behaftet sein, der auch in erster Linie durch die eingangs genannten atmosphärischen Effekte bedingt ist. Aufgrund der Berücksichtigung dieser ersten Daten zur Erstellung von mindestens einem Parameter für ein Fehlerkorrekturmodell zur Korrektur eines Positionsfehlers bei der Bestimmung einer Position für ein Fahrzeug sind keine kommerziellen Korrekturdienste erforderlich, mit deren Daten bislang derartige Positionsfehler bei der Bestimmung einer Fahrzeugposition berücksichtigt wurden. Der dadurch erzielte Vorteil besteht in einer höheren Genauigkeit bei der zu bestimmenden Fahrzeugposition, wenn diese unter Verwendung des Fehlerkorrekturmodells erfolgt. Die Fahrzeugposition selbst wird zum Beispiel von einem Navigationssystem oder einem Lokalisierungssystem generiert.

Ein weiterer Vorteil der vorliegenden Erfindung besteht darin, dass mit der Hilfe dieser ersten Daten, die von dem Satelliten erzeugt wurden, ein Fehlerkorrekturmodell fortlaufend optimiert werden kann, mit dem eine genauere Positionsbestimmung des Fahrzeugs, zum Beispiel durch ein entsprechendes Navigationssystem oder ein Lokalisierungssystem, vorgenommen werden kann. Vorzugsweise erfolgt die Aufnahme der ersten Daten in einem Zeitabschnitt, in welchem sich das betreffende Fahrzeug in einer Parkposition befindet. Ebenso erfolgt die Erstellung des Fehlerkorrekturmodells vorzugsweise während der Parkposition des Fahrzeugs. Hat das Fahrzeug seine Parkposition verlassen und bewegt sich fort, dann kann das bereits erstellte Fehlerkorrekturmodell im Fahrtbetrieb verwendet werden, eine in Echtzeit generierte Fahrzeugposition mit einem hohen Genauigkeitsgrad zu erzeugen. Ein hoher Genauigkeitsgrad bedeutet in diesem Kontext, dass Fehler bei der Positionsbestimmung korrigiert werden, eben aufgrund des eingesetzten Fehlerkorrekturmodells, das als Grundlage für die Positionsbestimmung eingesetzt wird.

Gemäß einer Ausführungsform der vorliegenden Erfindung ist das Fehlerkorrekturmodell als ein Atmosphärenmodell ausgebildet. Dadurch wird der Vorteil erzielt, dass die Korrektur des Positionsfehlers bei der Bestimmung einer Fahrzeugposition auf Basis von atmosphärenrelevanten Daten basiert, welche den Positionsfehler maßgeblich beeinflussen.

Gemäß einer Ausführungsform der vorliegenden Erfindung ist der Controller und / oder die erste Kommunikationsschnittstelle ausgebildet, von einem Stand-by-Modus in einen Betriebsmodus schaltbar zu sein, bevor die ersten Daten empfangen und verarbeitet werden, und wobei der Controller und / oder die erste Kommunikationsschnittstelle weiterhin ausgebildet ist, von dem Betriebsmodus in den Stand-by-Modus schaltbar zu sein, nachdem die ersten Daten empfangen und verarbeitet wurden. Dadurch wird der Vorteil erzielt, dass der Betrieb des Controllers und / oder der ersten Kommunikationsschnittstelle energieeffizient erfolgt und nur dann Energie für deren Betrieb benötigt wird, wenn sich diesen im Betriebsmodus befinden, um Daten zu empfangen und zu verarbeiten.

Gemäß einer Ausführungsform der vorliegenden Erfindung umfasst die Vorrichtung eine zeitgesteuerte Vorrichtung, welche ausgebildet ist, den Controller und / oder die erste Kommunikationsschnittstelle in definierten Zeitintervallen von dem Stand-by-Modus in den Betriebsmodus zu schalten, um erste Daten zu empfangen und zu verarbeiten. Die zeitgesteuerte Vorrichtung kann dabei vorzugsweise als eine Taktgebervorrichtung ausgebildet sein. Das Schalten des Controllers und / oder der ersten Kommunikationsschnittstelle durch die zeitgesteuerte Vorrichtung ermöglicht es, das Empfangen und Verarbeiten von ersten Daten in definierten Zeitintervallen sicherzustellen. Da eine hohe Anzahl von empfangenen ersten Daten von dem Satelliten vorteilhaft ist für die Erstellung von zumindest einem Parameter für die Erstellung des Fehlerkorrekturmodells zur Korrektur eines Positionsfehlers bei der Bestimmung einer Position für das Fahrzeug, ist es von Vorteil, wenn der Controller und / oder die erste Kommunikationsschnittstelle in regelmäßigen Zeitabständen von dem Stand-by-Modus in den Betriebsmodus geschaltet wird, damit dieser erste Daten empfangen und verarbeiten kann. Die Dauer dieser regelmäßigen Zeitabstände ist entsprechend einstellbar. Das regelmäßige Schalten des Controllers und / oder der ersten Kommunikationsschnittstelle von dem Stand-by-Modus in den Betriebsmodus erfolgt vorzugweise in einem Zeitraum, in dem sich das Fahrzeug in einer Parkposition befindet. Nach dem Empfangen von ersten Daten und deren Bearbeitung wird der Controller und / oder die erste Kommunikationsschnittstelle durch die zeitgesteuerte Vorrichtung wieder in den Stand-by-Modus zurückversetzt. Die erste Kommunikationsschnittstelle kann dabei auch ein integraler Bestandteil des Controllers sein.

Gemäß einer Ausführungsform der vorliegenden Erfindung umfasst die erfindungsgemäße Vorrichtung eine zweite Kommunikationsschnittstelle, über welche der Controller mit einer Sensorvorrichtung verbindbar ist, um zweite Daten zu empfangen, wobei die zweiten Daten von der Sensorvorrichtung erzeugt werden. Dadurch wird der Vorteil erzielt, dass die Genauigkeit des Fehlerkorrekturmodells weiter erhöht werden kann, da die zweiten Daten zusätzliche Informationen zur Verfügung gestellt werden können, die zur verbesserten Korrektur oder einer Minimierung des Positionsfehlers bei der Bestimmung einer Fahrzeugposition beitragen können. Die Sensorvorrichtung ist dabei ausgebildet, die zweiten Daten an den Controller zu senden.

Gemäß einer Ausführungsform der vorliegenden Erfindung umfasst die Sensorvorrichtung einen Temperatursensor und / oder einen Feuchtigkeitssensor und / oder einen Luftdrucksensor. Dadurch wird der Vorteil erzielt, dass zusätzliche negative Effekte, die auf weiteren oder anderen Umwelteinflüssen beruhen und die die Signallaufzeiten zwischen dem mindesten einen Satelliten und dem Fahrzeug durch nachteiliges Rauschen negativ beeinflussen, eindeutig von den sogenannten atmosphärischen Effekten selektiert und vorzugsweise eliminiert werden können.

Gemäß einer Ausführungsform der vorliegenden Erfindung ist der Controller mit einer Batterievorrichtung verbindbar. Dadurch wird der Vorteil erzielt, dass der Controller unabhängig von anderen im Fahrzeug vorhandenen Energiequellen versorgt und damit betrieben werden kann.

Gemäß einer Ausführungsform der vorliegenden Erfindung umfasst die Batterievorrichtung einen Akkumulator und / oder einen Kondensator und / oder eine Fahrzeugbatterie. Die Verwendung eines Akkumulators ermöglicht eine Energieversorgung des Controllers bzw. der erfindungsgemäßen Vorrichtung ohne auf anderweitige Energieressourcen im Fahrzeug zugreifen zu müssen, die auch Energie für andere fahrzeugtechnische Komponenten bereitstellen, und welche für die Aufrechterhaltung informationstechnischer und anderer Dienste für den Fahrzeugbetrieb zuständig sind. Außerdem kann durch die Verwendung eines Akkumulators dessen Größe individuell an die Erfordernisse für die Energiebedarfe der erfindungsgemäßen Vorrichtung und deren Komponenten wie zum Beispiel dem Controller und / oder der ersten Kommunikationsschnittstelle angepasst werden.

Gemäß einer Ausführungsform der vorliegenden Erfindung, umfasst die erfindungsgemäße Vorrichtung eine Speichervorrichtung, wobei die Speichervorrichtung ausgebildet ist, mit dem Controller verbindbar zu sein. Dadurch wird der Vorteil erreicht, dass ersten Daten, die von dem Controller empfangen werden für eine mögliche Verarbeitung zu einem späteren Zeitpunkt abgelegt werden können. Der Controller muss dann also nicht derart ausgelegt sein, gleichzeitig erste Daten zu empfangen und zu verarbeiten, da eine entsprechende Verarbeitung der empfangenen Daten auch zu einem späteren Zeitpunkt erfolgen kann, wenn die Empfangsphase abgeschlossen ist. Ein weiterer Vorteil besteht darin, dass bearbeitete Daten von dem Controller in der Speichervorrichtung hinterlegt werden können, auf die dann andere fahrzeugtechnische Komponenten zugreifen können, zum Beispiel ein Navigationssystem oder ein Lokalisierungssystem, welches die ersten Daten oder die von dem Controller verarbeiteten ersten Daten zum Beispiel in Form von Parametern für die Erstellung eines Fehlerkorrekturmodells zur Korrektur eines Positionsfehlers bei der Positionsbestimmung für das Fahrzeug nutzen möchte. Dies kann zu einem Zeitpunkt erfolgen, zu welchem sich das Fahrzeug in einer Parkposition befindet, aber auch während sich das Fahrzeug fortbewegt, um eine optimierte Positionsbestimmung unter Nutzung des während der Parkzeit erstellten Fehlerkorrekturmodells während der Fortbewegung des Fahrzeugs zu erzielen. Die Speichervorrichtung kann dabei ein integraler Bestandteil des Controllers sein oder auch außerhalb des Controllers angeordnet sein. Die Speichervorrichtung kann erste Daten, verarbeitete erste Daten, aber auch andere Daten wie zum Beispiel zweite Daten, die von einer Sensorvorrichtung bereitgestellt werden, aufnehmen und nach Bedarf abspeichern.

Gemäß einer Ausführungsform der vorliegenden Erfindung umfasst die Speichervorrichtung ein RAM-Modul und / oder ein Flashspeicher und / oder ein EEPROM. Dadurch wird der Vorteil erzielt, dass je nach verwendeten Speichertyp die in der Speichervorrichtung abzulegenden Daten unterschiedlich behandelt werden können, also zum Beispiel mit einer höheren Datenrate ausgelesen oder geschrieben werden können. Ein weiterer Vorteil besteht darin, dass eine flexible Handhabung der jeweils verwendeten Speichervorrichtung erzielt wird, das heißt, dass zum Beispiel ein schnellerer Austausch der Speichervorrichtung bei einer Wartung oder einer Erweiterung der Speicherkapazität ja nach technischer Anforderung bei der Verwendung eines bestimmten Speichertyps möglich wird.

Gemäß einer Ausführungsform der vorliegenden Erfindung ist die erste Kommunikationsschnittstelle und / oder die zweite Kommunikationsschnittstelle als ein integraler Bestandteil des Controllers ausgebildet. Dadurch wird der Vorteil erzielt, dass die Vorrichtung als ein kompaktes Gerät ausgebildet werden kann und auf diese Weise wertvoller Bauraum im Fahrzeug für andere fahrzeugrelevante Komponenten zur Verfügung gestellt werden kann.

Gemäß einer Ausführungsform der vorliegenden Erfindung ist der Controller ferner ausgebildet, das erstellte Fehlerkorrekturmodell während einer Bewegung des Fahrzeugs, also nachdem das Fahrzeug seine Parkposition verlassen hat, zu verbessern, um eine optimierte Positionsbestimmung des Fahrzeugs, insbesondere auch während der Bewegung des Fahrzeugs, zu erzielen. Dadurch wird der Vorteil erzielt, dass eine in Echtzeit ermittelte Position des Fahrzeugs, insbesondere während der Fortbewegung des Fahrzeugs, auf dem während der Parkzeit des Fahrzeugs erstellten Fehlerkorrekturmodell zurückgreifen kann und dadurch eine höhere Genauigkeit hat und zudem schneller bereitgestellt werden kann.

Gemäß einem zweiten Aspekt betrifft die Erfindung ein Verfahren zur Verwendung in einem Fahrzeug zum Empfangen und Verarbeiten von ersten Daten während einer Parkposition des Fahrzeugs, wobei die ersten Daten zur Bestimmung einer Entfernung zwischen mindestens einem Satelliten und dem Fahrzeug geeignet sind und Fehler bei einer Positionsbestimmung des Fahrzeugs aufgrund atmosphärischer Effekte berücksichtigen, und wobei die ersten Daten von mindestens einem Satelliten erzeugt werden, wobei der mindestens eine Satellit ausgebildet ist, die ersten Daten an das Fahrzeug zu senden, wobei für den Zeitabschnitt, während dem sich das Fahrzeug in der Parkposition befindet, die von dem Satelliten bereitgestellten und erzeugten ersten Daten in definierten Zeitintervallen empfangen werden, umfassend die Schritte: Empfangen der ersten Daten durch die erste Kommunikationsschnittstelle und Übermitteln der ersten Daten von der ersten Kommunikationsschnittstelle an einen Controller zur Verarbeitung der ersten Daten, und Bestimmen von zumindest einem Parameter für die Erstellung eines Fehlerkorrekturmodells zur Korrektur eines Positionsfehlers bei der Bestimmung einer Position für das Fahrzeug auf der Basis der empfangenen ersten Daten durch den Controller. Das erfindungsgemäße Verfahren kann mit der Vorrichtung durchgeführt werden.

Durch das erfindungsgemäße Verfahren wird der Vorteil erzielt, dass die Korrektur eines Positionsfehlers bei der Bestimmung einer Position für das Fahrzeug unter Verwendung des erstellten Fehlerkorrekturmodells zu einer höheren Genauigkeit der zu bestimmenden Fahrzeugposition führt. Außerdem kann diese Genauigkeit der zu bestimmenden Fahrzeugposition dann auch während einer Fortbewegung des Fahrzeugs aufrechterhalten werden, denn auf das bereits während der Parkposition erstellte Fehlerkorrekturmodell kann ja auch während der Fahrzeugfortbewegung zurückgegriffen werden, zum Beispiel von einem Navigationssystem oder einem Lokalisierungssystem, das die Fahrzeugposition in Echtzeit bestimmt. Ein weiterer Vorteil besteht außerdem darin, dass die zu ermittelnde Fahrzeugposition sehr schnell ermittelt werden kann, wenn das Fehlerkorrekturmodell bereits vorliegt, auf das das Navigationssystem oder das Lokalisierungssystem zurückgreift.

Gemäß einem dritten Aspekt betrifft die vorliegende Erfindung ein Fahrzeug mit einer Vorrichtung zum Empfangen und Verarbeiten von ersten Daten. Dabei ist das während einer Parkposition erstellte Fehlerkorrekturmodell während einer Bewegung des Fahrzeugs für ein im Fahrzeug angeordnetes Navigationssystem oder Lokalisierungssystem nutzbar ist, um eine optimierte Positionsbestimmung des Fahrzeugs während der Bewegung des Fahrzeugs zu erhalten. Dadurch wird der Vorteil erzielt, dass eine optimierte Positionsbestimmung des Fahrzeugs während seiner Fortbewegung erfolgen kann, um dem Fahrzeugnutzer eine höhere Genauigkeit der ermittelten Fahrzeugposition während seiner Fahrt bereitzustellen.

### BESCHREIBUNG DER FIGUREN

Weitere Ausführungsbeispiele werden unter Bezugnahme auf die beiliegenden Figuren näher erläutert. Es zeigen:
- Fig. 1: eine schematische Abbildung einer Vorrichtung zur Verwendung in einem Fahrzeug gemäß einer Ausführungsform der vorliegenden Erfindung;
- Fig. 2: ein Diagramm eines Verfahrens für eine Vorrichtung zur Verwendung in einem Fahrzeug zum Empfangen und Verarbeiten von ersten Daten.

### DETAILIERTE BESCHREIBUNG DER FIGUREN

In der folgenden ausführlichen Beschreibung wird auf die beiliegenden Zeichnungen Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne von dem Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

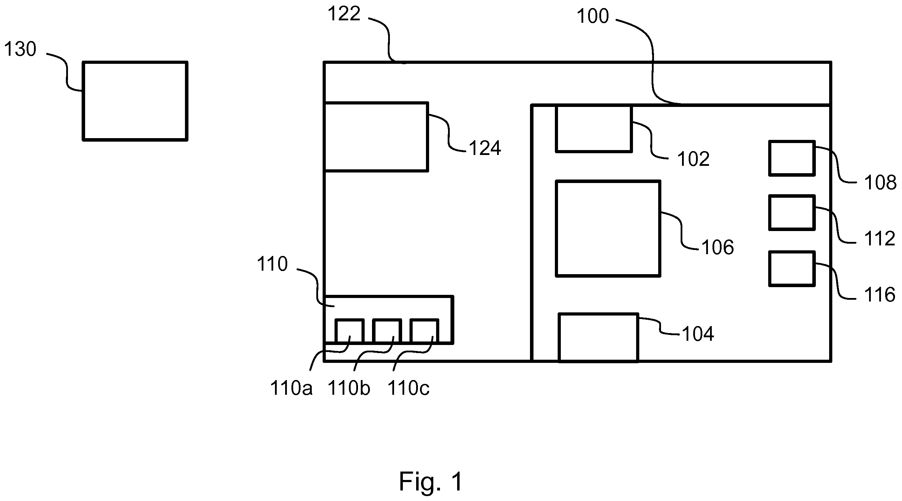

Fig. 1 zeigt eine schematische Abbildung einer Vorrichtung 100 zur Verwendung in einem Fahrzeug 122.

Das Fahrzeug 122, wie in der Fig. 1 dargestellt, umfasst ein Navigationssystem 124 mit einer GNSS-Empfangsvorrichtung (Global Navigation Satellite System) 126, um eine Position des Fahrzeugs 122 zu bestimmen oder zu berechnen. Das Navigationssystem 124 kann ein in das Fahrzeug 122 einbaubares Navigationssystem sein. Im Folgenden steht das Navigationssystem 124 stellvertretend für alle Systeme im Fahrzeug, die eine Position des Fahrzeugs bestimmen, also beispielsweise auch ein Lokalisierungssystem oder ein System für einen automatischen Notruf (eCall).

Gemäß der Fig. 1 ist die erfindungsgemäße Vorrichtung 100 zur Verwendung in einem Fahrzeug 122 zum Empfangen und Verarbeiten von ersten Daten, welche Fehler bei einer Positionsbestimmung des Fahrzeugs 122 berücksichtigen vorgesehen. Die ersten Daten werden von mindestens einem Satelliten 130 erzeugt, wobei der mindestens eine Satellit 130 ausgebildet ist, die ersten Daten an das Fahrzeug 122 zu senden. In der Figur 1 ist zwar aus Gründen der Einfachheit nur ein Satellit dargestellt, idealerweise sind jedoch bis vier oder mehr Satelliten im Einsatz, die jeweils Daten und Signale an das betreffende Fahrzeug übermitteln, um daraus eine bewertbare Aussage über mögliche Fehler in Laufzeiten von Signalen, die zwischen den einzelnen Satelliten und dem Fahrzeug ausgetauscht werden, treffen zu können. Die ersten Daten berücksichtigen dabei einen atmosphärischen Zustand zwischen dem Satelliten 130 und dem Fahrzeug 122, der Einfluss auf einen Positionsfehler bei einer Bestimmung einer Position des Fahrzeugs 122 hat. Wie bereits eingangs erwähnt, sind diese sogenannten Messungen dieser ersten Daten durch die Vorrichtung 100 die Basis für eine Bestimmung von einzelnen Signallaufzeiten, die verschiedene Signale von dem Satelliten zu dem Fahrzeug benötigen. Mögliche Fehler in diesen Signallaufzeiten der einzelnen Signale können aufgrund der unveränderten Position des Fahrzeugs zum Zeitpunkt der einzelnen Messungen und dem zeitlichen Abstand zwischen den einzelnen durchgeführten Messungen dann entdeckt und schließlich herausgerechnet werden, wie es nachfolgend noch eingehender erläutert wird.

Die Vorrichtung 100 umfasst eine erste Kommunikationsschnittstelle 102 zur Kommunikation mit dem Satelliten 130. Unter einer Kommunikation der ersten Kommunikationsschnittstelle 102 mit dem Satelliten 130 ist im Kontext dieser Erfindung vorzugsweise ein Empfangen der ersten Daten von dem Satelliten 130 zu verstehen. Man kann einen Teil der Funktion der ersten Kommunikationsschnittstelle 102 also im Prinzip wie eine Art von Antenne incl. Empfänger (Transceiver) auffassen, die die ersten Daten des Satelliten 130 empfängt. Die Kommunikation zwischen dem Satelliten 130 und dem Fahrzeug 122 über die erste Kommunikationsschnittstelle 102 erfolgt vorzugsweise während das Fahrzeug 122 eine Parkposition eingenommen hat, das heißt, die Position des Fahrzeugs ändert sich vorzugsweise nicht, während die Vorrichtung 100 die ersten Daten von dem Satelliten 130 empfängt. Ein Grund liegt darin, dass sich die atmosphärischen Effekte nur sehr langsam verändern.

Die Vorrichtung 100 umfasst eine erste Kommunikationsschnittstelle 102, die ausgebildet ist, die ersten Daten von dem mindestens einen Satelliten 130 zu empfangen. In dieser Hinsicht verhält sich die erste Kommunikationsschnittstelle 102 ähnlich wie eine Radioantenne mit Radioempfänger (Transceiver), die lediglich Daten von einem oder mehreren Satelliten 130 empfängt. Die Kommunikationsschnittstelle 102 kann auch ein vollständiger GNSS-Empfänger sein, incl. der notwendigen Datenverarbeitung zur Bestimmung der Satelliten-Rohdaten, wie beispielsweise Pseudoranges, Deltaranges, Trägerphasen, etc. Es kann sich bei der Kommunikationsschnittstelle 102 auch um eine GNSS-Empfangsvorrichtung handeln.

Die Vorrichtung 100 umfasst weiterhin einen Controller 106, welcher ausgebildet ist, mit der ersten Kommunikationsschnittstelle 102 verbindbar zu sein, um erste Daten von der ersten Kommunikationsschnittstelle 102 zur Verarbeitung zu empfangen. Die erste Kommunikationsschnittstelle 102 kann dabei vorzugsweise ein integraler Bestandteil des Controllers 106 sein oder aber auch von diesem separiert sein.

Die ersten Daten, die der Controller 106 empfangen hat, können dann zum Beispiel von diesem in einer Speichervorrichtung 108 ablegt werden, wie diese in der Fig. 1 dargestellt ist. Die Speichervorrichtung 108, die als ein RAM-Modul, ein Flashspeicher oder ein EEPROM oder eine andere Speicherart ausgebildet sein kann, kann dabei ein integraler Bestandteil des Controllers 106 sein. Die Speichervorrichtung 108 kann innerhalb der Vorrichtung 100, aber außerhalb des Controllers 106 angeordnet sein, was unter Umständen auch anderen technischen Komponenten, die ein Bestandteil der Vorrichtung 100 sind oder mit dieser verbindbar sind, einen Zugriff zur Ablage von Daten erlauben kann.

Der Controller 106 kann als ein separater Controller 106 ausgebildet sein, dessen primäre Aufgabe in dem Empfang und in der Verarbeitung der ersten Daten liegen kann, was jedoch zusätzliche Aufgaben nicht ausschließt. Dadurch kann der Controller 106 in Bezug auf seine Struktur und Energieverbrauch auf seine jeweilige Aufgabe hin entsprechend dimensioniert werden.

Der Controller 106 ist ausgebildet, auf der Basis der empfangenen ersten Daten, zumindest einen Parameter für die Erstellung eines Fehlerkorrekturmodells zur Korrektur eines Positionsfehlers bei der Bestimmung einer Position für das Fahrzeug 122 zu bestimmen. Das Fehlerkorrekturmodell unter Nutzung der zuvor erstellten Parameter kann dabei vorzugsweise von dem Navigationssystem 124 erstellt werden, wenn das Navigationssystem 124 eine Position des Fahrzeugs 122 bestimmt. Es wäre jedoch auch möglich, dass der Controller 106 Unterstützung bei der Erstellung dieses Fehlerkorrekturmodells leistet oder es gänzlich selbst erstellt, wenn entsprechende Rechenkapazitäten des Controllers 106 bereitstehen. Durch die Verwendung eines entsprechenden Fehlerkorrekturmodells lassen sich Fehler bei der Positionsbestimmung aufgrund atmosphärischer Effekte eliminieren. Dadurch wird ein höherer Grad an Genauigkeit bei der Positionsbestimmung des Fahrzeugs 122 erzielt.

Der Controller 106 kann ferner ausgebildet sein, das erstellte Fehlerkorrekturmodell während einer Bewegung des Fahrzeugs 122, also nachdem das Fahrzeug 122 seine Parkposition verlassen hat, zu verbessern, um eine optimierte Positionsbestimmung des Fahrzeugs 122, insbesondere auch während der Bewegung des Fahrzeugs 122, zu erzielen.

Das vorzugsweise während einer Parkposition des Fahrzeugs 122 erstellte Fehlerkorrekturmodell kann zudem während der Bewegung des Fahrzeugs 122 eingesetzt werden, zum Beispiel von einem Navigationssystem 124, um eine optimierte Position des sich bewegenden Fahrzeugs 122 in Echtzeit zu ermitteln.

Um mit den vorhandenen Energieressourcen sparsam umzugehen, ist der Controller 106 ferner ausgebildet ist, von einem Stand-by-Modus in einen Betriebsmodus schaltbar zu sein. Dies erfolgt vorzugsweise immer dann, bevor der Controller 106 erste Daten empfängt und verarbeitet und verarbeitet. Sind ausreichend erste Daten empfangen worden und wurden diese gegebenenfalls auch bearbeitet, dann kann der Controller 106 wieder zurück von dem Betriebsmodus in den energiesparenden Stand-by-Modus geschaltet zu werden, in welchem der Controller 106 und die Vorrichtung 100 wenig bis gar keine Energie verbrauchen. Dadurch, dass der Controller 106 zwischen diesen beiden Modi schaltbar ist, kann der Controller 106 und damit auch die Vorrichtung 100 ressourcenschonend betrieben werden. Gleiches gilt für die erste Kommunikationsschnittstelle 102, die ebenfalls entsprechend ausgebildet sein kann, zwischen diesen beiden Modi geschaltet zu werden. Insbesondere, wenn diese separat von dem Controller 106 angeordnet ist.

Das Schalten des Controllers 106 und / oder der ersten Kommunikationsschnittstelle 102 zwischen den beiden Modi, Stand-by-Modus und dem Betriebsmodus zum Empfangen und Verarbeiten von ersten Daten bzw. allgemeiner, von Daten, die gegebenenfalls auch von anderen technischen Komponenten der Vorrichtung 100 oder des Fahrzeugs 122 an den Controller 106 übermittelt werden, kann vorzugsweise von einer zeitgesteuerten Vorrichtung 116, die zum Beispiel als ein Taktgenerator ausgebildet sein kann, erfolgen. Diese zeitgesteuerte Vorrichtung 116 kann den Controller 106 in definierten und optional auch individuell einstellbaren Zeitintervallen von dem Stand-by-Modus in den Betriebsmodus - der Controller 106 wacht also auf - damit dieser erste Daten empfangen bzw. verarbeiten kann. Gleiches gilt, wenn der Controller 106 und / oder der ersten Kommunikationsschnittstelle 102 von dem Betriebsmodus in den Stand-by-Modus von der zeitgesteuerten Vorrichtung 116 zurückversetzt wird. Vorrichtung 116 kann dabei Teil des Controllers 106 sein oder ein eigenständiges Element von Vorrichtung 100.

Da es für die Erstellung von zumindest einen Parameter für die Erstellung eines Fehlerkorrekturmodells zur Korrektur eines Positionsfehlers und damit auch für den Grad der Genauigkeit einer Positionsbestimmung für das Fahrzeug 122 von Bedeutung ist, einen großen Satz von ersten Daten zu empfangen, ist es sinnvoll, wenn der Controller 106 in regelmäßigen Zeitabständen ersten Daten empfängt und diese verarbeitet. Dazu muss der Controller 106 regelmäßig von dem Stand-by-Modus in den Betriebsmodus versetzt werden. Die kann eben durch die zeitgesteuerte Vorrichtung 116 erfolgen. Optional kann sich jedoch auch der Controller 106 selbst in einen derartigen Zustand versetzen, wenn dieser über einen internen Taktgeber verfügt. Die zeitgesteuerte Vorrichtung 116 kann in diesem speziellen Fall Bestandteil des Controllers 106 sein.

Der Controller 106 und / oder die erste Kommunikationsschnittstelle 102 kann entsprechende Prüfroutinen beinhalten, um zu überprüfen, ob erste Daten von dem Satelliten 130 empfangen werden können. Eine derartige Überprüfung erfolgt vorzugweise kurz bevor oder während das Fahrzeug 122 in eine Parkposition befördert wird. Stellt der Controller 106 der Vorrichtung 100 fest, dass keine ersten Daten von dem Satelliten 130 zu empfangen sind, weil etwa wegen einer Parkposition des Fahrzeugs 122 in einer Garage der Signalempfang schlecht ist, dann werden keine weiteren Versuche von dem Controller 106 unternommen, neue Messungen durchzuführen, das heißt, erste Daten zu erhalten. Der Controller 106 wird dann in den Stand-by-Modus versetzt, um Energie zu sparen. Bemerkt die Vorrichtung 100 jedoch, dass sich zum Beispiel die Parkposition des Fahrzeugs 122 verändert hat und ein besserer Signalempfang möglich ist, dann kann der Controller 106 unter Umständen wieder von dem Stand-by-Modus in den Betriebsmodus versetzt werden, um erste Daten via der ersten Kommunikationsschnittstelle 102 empfangen zu können.

Gemäß Fig. 1 umfasst die Vorrichtung 100 eine Batterievorrichtung 112, welche ausgebildet ist, mit dem Controller 106 verbindbar zu sein, um dem Controller 106 mit Energie zu versorgen. Die Batterievorrichtung 112 kann ein Akkumulator, ein Kondensator oder in besonderen Fällen auch eine Fahrzeugbatterie des Fahrzeugs 122 (nicht dargestellt in der Fig. 1) oder eine beliebige Kombination von verschiedenen Energiespeichern sein. Die Batterievorrichtung 112 muss sich nicht zwangsläufig und vollständig innerhalb der Vorrichtung 100 befinden, sondern kann verteilt im Fahrzeug 122 angeordnet sein, wenn dadurch ein effizientes Batteriemanagementsystems in dem Fahrzeug 122 installiert werden kann, das ganz unterschiedliche Fahrzeugkomponenten mit Energie versorgt. Die Größe der Batterievorrichtung 112 hängt von verschiedenen Faktoren ab. Ein Faktor, der die Dimensionierung der Batterievorrichtung 112 beeinflusst, kann darin bestehen, wie viele Male über eine definierte Zeitspanne der Controller 106 aufgeweckt wird, das heißt, wie oft der Controller 106 von einem Stand-by-Modus in einen Betriebsmodus versetzt wird. Eine andere Einflussgröße kann die Zeitdauer sein, die der Controller 106 zu dem Empfang und dem Verarbeiten von ersten Daten benötigt. Außerdem spielt es bei der Dimensionierung der Batterievorrichtung 112 eine Rolle, welche weiteren technischen Komponenten außer dem Controller 106 mit Energie versorgt werden müssen.

In einer weiteren Ausführungsform der Vorrichtung 100, und wie in der Fig. 1 dargestellt, ist die Vorrichtung 100 mit einer Sensorvorrichtung 110 über eine zweite Kommunikationsschnittstelle 104 verbindbar, um zweite Daten zu empfangen. Die zweiten Daten werden vorzugsweise von der Sensorvorrichtung 110 erzeugt und können von dieser an den Controller 106 zur weiteren Verarbeitung übermittelt werden. Diese zweiten Daten können etwa ebenfalls in die Speichervorrichtung 108 zu einer Verwendung zu einem späteren Zeitpunkt hinterlegt werden.

Die zweiten Daten können dabei Werte darstellen, die von einer Anzahl von verschiedenen Sensoren aufgenommen wurden. In der Fig. 1 umfasst die Sensorvorrichtung 110, welche im Fahrzeug 122 angeordnet ist, einen Temperatursensor 110a, einen Feuchtigkeitssensor 110b und einen Luftdrucksensor 110c. Die gemessenen Werte dieser Sensoren, deren Anzahl und Typ nicht auf die hier angegebenen beschränkt ist, werden über die Sensorvorrichtung 110 an den Controller 106 übermittelt und stellen auf diese Weise zusätzliche Informationen für den Controller 106 zur Verfügung. Die zweiten Daten, welche also über die vorhandene Sensorik eingeholt werden, tragen dazu bei, weitere Rauschquellen, die die Laufzeiten der Signale zwischen dem Satelliten 130 und dem Fahrzeug 122 beeinflussen, zu identifizieren, damit aufgrund dieser sogenannten Rauschquellen ein entstehender Positionsfehler bei der Positionsbestimmung für das Fahrzeug 122 bestimmt und letztlich herausgerechnet werden kann. Die einzelnen Sensoren, wie in der Fig. 1 dargestellt, können an verschiedenen Positionen innerhalb des Fahrzeugs 122 angeordnet sein.

Die Sensorvorrichtung 110 kann zur Verarbeitung der an sie übermittelten und aufgenommenen Sensorwerte eine entsprechende Verarbeitungsvorrichtung (nicht dargestellt in der Fig. 1) aufweisen. Außerdem können über eine zusätzliche, nicht in der Fig. 1 dargestellte Kommunikationsschnittstelle die einzelnen Sensorwerte von der Sensorvorrichtung 110 an den Controller 106 übermittelt werden. Die zweiten Daten können dabei unabhängig von den ersten Daten erzeugt und an den Controller 106 übermittelt werden. Aufgrund der ersten Daten und der zweiten Daten ist der Controller 106 in der Lage, zwischen atmosphärischen Störeffekten und anderen Störeffekten zu unterscheiden, die eine Positionsbestimmung des Fahrzeugs 122 negativ beeinflussen. Dadurch ist eine präzisere Abschätzung der atmosphärischen Effekte möglich, was letztlich zu einer Verbesserung des Fehlerkorrekturmodells beitragen kann.

Die von dem Controller 106 empfangenen ersten Daten können einfach in die Speichervorrichtung 108 hinterlegt werden zur weiteren Verwendung von anderen Vorrichtungen wie zum Beispiel dem Navigationssystem 124. Der Controller 106 kann jedoch auch ausgebildet sein und wie bereits beschrieben, aus den ersten Daten zumindest einen Parameter für ein optimiertes Fehlerkorrekturmodell erstellen und diesen Parameter in der Speichervorrichtung 108 zur weiteren Verwendung zum Beispiel durch das Navigationssystem 124 hinterlegen.

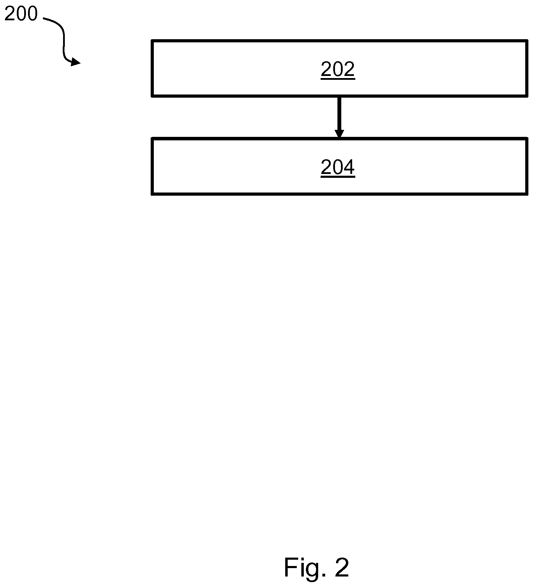

Fig. 2 zeigt ein Diagramm eines Verfahrens 200 für eine Vorrichtung 100 zur Verwendung in einem Fahrzeug 122 zum Empfangen und Verarbeiten von ersten Daten während einer Parkposition des Fahrzeugs 122, welche Fehler bei einer Positionsbestimmung des Fahrzeugs 122 aufgrund atmosphärischer Effekte berücksichtigen, und wobei die ersten Daten von mindestens einem Satelliten 130 erzeugt werden, wobei der mindestens eine Satellit 130 ausgebildet ist, die ersten Daten an das Fahrzeug 122 zu senden. Das Verfahren 200 umfasst einen ersten Schritt 202 des Empfangen der ersten Daten durch die erste Kommunikationsschnittstelle 102 und Übermitteln der ersten Daten von der ersten Kommunikationsschnittstelle 102 an einen Controller 106 zur Verarbeitung der ersten Daten. Das Verfahren 200 umfasst einen zweiten Schritt 202 des Bestimmens von zumindest einem Parameter für die Erstellung eines Fehlerkorrekturmodells zur Korrektur eines Positionsfehlers bei der Bestimmung einer Position für das Fahrzeug 122 auf der Basis der empfangenen ersten Daten durch den Controller 106.

Das Verfahren 200 kann mit der erfindungsgemäßen Vorrichtung 100 durchgeführt werden.

### BEZUGSZEICHENLISTE

- 100: Vorrichtung
- 102: Erste Kommunikationsschnittstelle
- 106: Controller
- 108: Speichervorrichtung
- 110: Sensorvorrichtung
- 110a: Temperatursensor
- 110b: Feuchtigkeitssensor
- 110c: Luftdrucksensor
- 112: Batterievorrichtung
- 116: Zeitgesteuerte Vorrichtung
- 122: Fahrzeug
- 124: Navigationssystem
- 128: Verarbeitungsvorrichtung
- 130: Satellit

- 200: Verfahren
- 202: Empfangen von ersten Daten
- 204: Bestimmen von zumindest einem Parameter

## Patentansprüche

1. Vorrichtung (100) zur Verwendung in einem Fahrzeug (122) zum Empfangen und Verarbeiten von ersten Daten während einer Parkposition des Fahrzeugs (122), wobei die ersten Daten Informationen über eine Laufzeit eines Signales von mindestens einem Satelliten zum Fahrzeug enthalten und Fehler bei einer Positionsbestimmung des Fahrzeugs (122) aufgrund atmosphärischer Effekte berücksichtigen, und wobei die ersten Daten von dem Satelliten (130) erzeugt werden, wobei der mindestens eine Satellit (130) ausgebildet ist, die ersten Daten an das Fahrzeug (122) zu senden, wobei die Vorrichtung für den Zeitabschnitt, während dem sich das Fahrzeug in der Parkposition befindet, die von dem Satelliten bereitgestellten und erzeugten ersten Daten in definierten Zeitintervallen empfängt, mit
einer ersten Kommunikationsschnittstelle (102), wobei die erste Kommunikationsschnittstelle (102) ausgebildet ist, die ersten Daten von dem mindestens einen Satelliten (130) zu empfangen,
einem Controller (106), welcher ausgebildet ist, mit der ersten Kommunikationsschnittstelle (102) verbindbar zu sein, um erste Daten von der ersten Kommunikationsschnittstelle (102) zur Verarbeitung zu empfangen, und
wobei der Controller (106) ferner ausgebildet ist, auf der Basis der empfangenen ersten Daten, zumindest einen Parameter für die Erstellung eines Fehlerkorrekturmodells zur Korrektur eines Positionsfehlers bei der Bestimmung einer Position für das Fahrzeug (122) zu bestimmen.

2. Vorrichtung (100) nach Anspruch 1, wobei das Fehlerkorrekturmodell als ein Atmosphärenmodell ausgebildet ist.

3. Vorrichtung (100) nach Anspruch 1 oder 2, wobei der Controller (106) und / oder die erste Kommunikationsschnittstelle (102) ausgebildet ist, von einem Stand-by-Modus in einen Betriebsmodus schaltbar zu sein, bevor die ersten Daten empfangen und verarbeitet werden, und wobei der Controller (106) und / oder die erste Kommunikationsschnittstelle (102) weiterhin ausgebildet ist, von dem Betriebsmodus in den Stand-by-Modus schaltbar zu sein, nachdem die ersten Daten empfangen und verarbeitet wurden.

4. Vorrichtung (100) nach einem der vorhergehenden Ansprüche, wobei die Vorrichtung (100) eine zeitgesteuerte Vorrichtung (116) umfasst, welche ausgebildet ist, den Controller (106) und / oder die erste Kommunikationsschnittstelle (102) in definierten Zeitintervallen von dem Stand-by-Modus in den Betriebsmodus zu schalten, um erste Daten zu empfangen und zu verarbeiten.

5. Vorrichtung (100) nach einem der vorhergehenden Ansprüche, umfassend eine zweite Kommunikationsschnittstelle (104), über welche der Controller (106) mit einer Sensorvorrichtung (110) verbindbar ist, um zweite Daten zu empfangen, wobei die zweiten Daten von der Sensorvorrichtung (110) erzeugt werden.

6. Vorrichtung (100) nach Anspruch 5, wobei die Sensorvorrichtung (110) einen Temperatursensor (110a) und/oder einen Feuchtigkeitssensor (110b) und/oder einen Luftdrucksensor (110c) umfasst.

7. Vorrichtung (100) nach einem der vorhergehenden Ansprüche, wobei der Controller (106) mit einer Batterievorrichtung (112) verbindbar ist.

8. Vorrichtung (100) nach Anspruch 7, wobei die Batterievorrichtung (112) einen Akkumulator und/oder einen Kondensator und/oder eine Fahrzeugbatterie umfasst.

9. Vorrichtung (100) nach einem der vorhergehenden Ansprüche, umfassend eine Speichervorrichtung (108), welche ausgebildet ist, mit dem Controller (106) verbindbar zu sein.

10. Vorrichtung (100) nach Anspruch 9, wobei die Speichervorrichtung (108) ein RAM-Modul und / oder ein Flashspeicher und / oder ein EEPROM-Modul umfasst.

11. Vorrichtung (100) nach einem der vorhergehenden Ansprüche, wobei die erste Kommunikationsschnittstelle (102) und / oder die zweite Kommunikationsschnittstelle (104) als ein integraler Bestandteil des Controllers (106) ausgebildet ist.

12. Vorrichtung (100) nach einem der vorhergehenden Ansprüche, wobei der Controller (106) ferner ausgebildet ist, das erstellte Fehlerkorrekturmodell während einer Bewegung des Fahrzeugs (122), also nachdem das Fahrzeug (122) seine Parkposition verlassen hat, zu verbessern, um eine optimierte Positionsbestimmung des Fahrzeugs (122), insbesondere auch während der Bewegung des Fahrzeugs (122), zu erzielen.

13. Verfahren (200) zur Verwendung in einem Fahrzeug (122) zum Empfangen und Verarbeiten von ersten Daten während einer Parkposition des Fahrzeugs (122), wobei die ersten Daten Informationen über eine Laufzeit eines Signales von mindestens einem Satelliten zum Fahrzeug enthalten und Fehler bei einer Positionsbestimmung des Fahrzeugs (122) aufgrund atmosphärischer Effekte berücksichtigen, und wobei die ersten Daten von dem Satelliten (130) erzeugt werden, wobei der mindestens eine Satellit (130) ausgebildet ist, die ersten Daten an das Fahrzeug (122) zu senden, wobei für den Zeitabschnitt, während dem sich das Fahrzeug in der Parkposition befindet, die von dem Satelliten bereitstellten und erzeugten ersten Daten in definierten Zeitintervallen empfangen werden, umfassend die Schritte:
Empfangen (202) der ersten Daten durch die erste Kommunikationsschnittstelle (102) und Übermitteln der ersten Daten von der ersten Kommunikationsschnittstelle (102) an einen Controller (106) zur Verarbeitung der ersten Daten, und
Bestimmen (204) von zumindest einem Parameter für die Erstellung eines Fehlerkorrekturmodells zur Korrektur eines Positionsfehlers bei der Bestimmung einer Position für das Fahrzeug (122) auf der Basis der empfangenen ersten Daten durch den Controller (106).

14. Fahrzeug (122) mit einer Vorrichtung (100) zur Verwendung in einem Fahrzeug (122) zum Empfangen und Verarbeiten von ersten Daten nach einem der Ansprüche 1 bis 11.

15. Fahrzeug (122) nach Anspruch 14, wobei das während einer Parkposition erstellte Fehlerkorrekturmodell während einer Bewegung des Fahrzeugs (122) für ein im Fahrzeug angeordnetes Navigationssystem (124) nutzbar ist, um eine optimierte Positionsbestimmung des Fahrzeugs (122) während der Bewegung des Fahrzeugs (122) zu erhalten.

## Claims

1. A device (100) for use in a vehicle (122) for receiving and processing first data during a parking position of the vehicle (122), wherein the first data contain information about a duration of a signal of at least one satellite relating to the vehicle and take into account errors during determining a position of the vehicle (122) due to atmospheric effects, and wherein the first data are generated by the satellite (130), wherein the at least one satellite (130) is designed to send the first data to the vehicle (122), wherein the device receives the first data provided and generated by the satellite in defined temporal intervals during the period of time in which the vehicle is in the parking position, with
a first communication interface (102), wherein the first communication interface (102) is designed to receive the first data from the at least one satellite (130),
a controller (106) designed to be connectible to the first communication interface (102) in order to receive first data from the first communication interface (102) for processing, and wherein the controller (106) is further designed to determine at least one parameter for creating an error correction model for correcting a positioning area during the determining of a position for the vehicle (122) based on the received first data.

2. The device (100) according to Claim 1, wherein the error correction model is designed as an atmosphere model.

3. The device (100) according to Claim 1 or 2, wherein the controller (106) and/or the first communication interface (102) is/are designed to be switchable from a standby mode to an operation mode before the first data are received and processed, and wherein the controller (106) and/or the first communication interface (102) is/are designed to be switchable from an operation mode to a standby mode after the first data are received and processed.

4. The device (100) according to any one of the preceding claims, wherein the device (100) comprises a time-controlled device (116) which is designed to switch the controller (106) and/or the first communication interface (102) from the standby mode to the operation mode at regular intervals in order to receive and process first data.

5. The device (100) according to any one of the preceding claims, comprising a second communication interface (104) via which the controller (106) is connectible to a sensor device (110) in order to receive second data, wherein the second data are generated by the sensor device (110).

6. The device (100) according to Claim 5, wherein the sensor device (110) comprises a temperature sensor (110a) and/or a moisture sensor (110b) and/or an air pressure sensor (110c).

7. The device (100) according to any one of the preceding claims, wherein the controller (106) is connectible to a battery device (112).

8. The device (100) according to Claim 7, wherein the battery device (112) comprises an accumulator and/or a capacitor and/or a vehicle battery.

9. The device (100) according to any one of the preceding claims, comprising a memory device (108) designed to be connectible to the controller (106).

10. The device (100) according to Claim 9, wherein the memory device (108) comprises a RAM module and/or a flash memory and/or an EEPROM module.

11. The device (100) according to any one of the preceding claims, wherein the first communication interface (102) and/or the second communication interface (104) is/are designed as an integral component of the controller (106).

12. The device (100) according to any one of the preceding claims, wherein the controller (106) is further designed to improve the created error correction model during a movement of the vehicle (122), meaning after the vehicle (122) has left its parking position, in order to attain an optimized determination of the position of the vehicle (122), in particular also during the movement of the vehicle (122).

13. A method (200) for use in a vehicle (122) for receiving and processing first data during a parking position of the vehicle (122), wherein the first data contain information about a duration of a signal of at least one satellite relating to the vehicle and take into account errors during determining a position of the vehicle (122) due to atmospheric effects, and wherein the first data are generated by the satellite (130), wherein the at least one satellite (130) is designed to send the first data to the vehicle (122), wherein the first data provided and generated by the satellite are received in defined temporal intervals during the period of time in which the vehicle is in the parking position, comprising the steps of:
receiving (202) the first data by the first communication interface (102) and transmitting the first data from the first communication interface (102) to a controller (106) for processing the first data, and
determining (204) at least one parameter for creating an error correction model for correcting a positioning error during the determining of a position for the vehicle (122) based on the received first data by the controller (106).

14. A vehicle (122) having a device (100) for use in a vehicle (122) for receiving and processing first data according to any one of Claims 1 to 11.

15. The vehicle (122) according to Claim 14, wherein the error correction model created during a parking position is usable for a navigations system (124) arranged in the vehicle during a movement of said vehicle (122) in order to obtain an optimized determination of the position of the vehicle (122) during the movement of the vehicle (122).

## Revendications

1. Dispositif (100) pour utilisation dans un véhicule (122) pour la réception et le traitement de premières données pendant une position de stationnement du véhicule (122), les premières données contenant des informations sur un temps de propagation d'un signal d'au moins un satellite au véhicule et tenant compte d'erreurs lors d'une détermination de position du véhicule (122) en raison d'effets atmosphériques, et les premières données étant générées par le satellite (130), l'au moins un satellite (130) étant formé pour envoyer les premières données au véhicule (122), le dispositif recevant les premières données mises à disposition et générées par le satellite à des intervalles de temps définis pour la période pendant laquelle le véhicule se trouve en position de stationnement, avec
une première interface de communication (102), la première interface de communication (102) étant formée pour recevoir les premières données de l'au moins un satellite (130),
un contrôleur (106), lequel est formé pour pouvoir être connecté à la première interface de communication (102), afin de recevoir des premières données de la première interface de communication (102) en vue de leur traitement, et le contrôleur (106) étant en outre formé pour déterminer au moins un paramètre pour la génération d'un modèle de correction d'erreurs pour la correction d'une erreur de position lors de la détermination d'une position pour le véhicule (122), sur la base des premières données reçues.

2. Dispositif (100) selon la revendication 1, le modèle de correction d'erreurs étant formé comme un modèle atmosphérique.

3. Dispositif (100) selon la revendication 1 ou 2, le contrôleur (106) et/ou la première interface de communication (102) étant formés pour pouvoir passer d'un mode veille à un mode de fonctionnement, avant que les premières données aient été reçues et traitées, et le contrôleur (106) et/ou la première interface de communication (102) étant formés en outre pour pouvoir passer du mode de fonctionnement au mode veille après que les premières données aient été reçues et traitées.

4. Dispositif (100) selon l'une des revendications précédentes, le dispositif (100) comprenant un dispositif temporisé (116), lequel est formé pour faire passer le contrôleur (106) et/ou la première interface de communication (102) du mode veille au mode de fonctionnement à des intervalles de temps définis, afin de recevoir et de traiter des premières données.

5. Dispositif (100) selon l'une des revendications précédentes, comprenant une deuxième interface de communication (104) par laquelle le contrôleur (106) peut être connecté à un dispositif de détection (110) afin de recevoir des deuxièmes données, les deuxièmes données étant générées par le dispositif de détection (110).

6. Dispositif (100) selon la revendication 5, le dispositif de détection (110) comprenant un capteur de température (110a) et/ou un capteur d'humidité (110b) et/ou un capteur de pression atmosphérique (110c).

7. Dispositif (100) selon l'une des revendications précédentes, le contrôleur (106) pouvant être connecté à un dispositif de batterie (112).

8. Dispositif (100) selon la revendication 7, le dispositif de batterie (112) comprenant un accumulateur et/ou un condensateur et/ou une batterie de véhicule.

9. Dispositif (100) selon l'une des revendications précédentes, comprenant un dispositif de stockage (108), lequel est formé pour pouvoir être connecté au contrôleur (106).

10. Dispositif (100) selon la revendication 9, le dispositif de stockage (108) comprenant un module RAM et/ou une mémoire Flash et/ou un module EEPROM.

11. Dispositif (100) selon l'une des revendications précédentes, la première interface de communication (102) et/ou la deuxième interface de communication (104) étant formées comme une partie intégrante du contrôleur (106).

12. Dispositif (100) selon l'une des revendications précédentes, le contrôleur (106) étant formé en outre pour améliorer le modèle de correction d'erreurs généré pendant un déplacement du véhicule (122), c'est-à-dire après que le véhicule (122) a quitté sa position de stationnement, afin de réaliser une détermination de position optimisée du véhicule (122), en particulier aussi pendant le déplacement du véhicule (122).

13. Procédé (200) pour utilisation dans un véhicule (122) pour la réception et le traitement de premières données pendant une position de stationnement du véhicule (122), les premières données comprenant des informations sur un temps de propagation d'un signal d'au moins un satellite au véhicule et tenant compte d'erreurs lors d'une détermination de position du véhicule (122) en raison d'effets atmosphériques, et les premières données étant générées par le satellite (130), l'au moins un satellite (130) étant formé pour envoyer les premières données au véhicule (122), les premières données mises à disposition et générées par le satellite étant reçues à des intervalles de temps définis pour la période pendant laquelle le véhicule se trouve en position de stationnement, comprenant les étapes :
réception (202) des premières données par la première interface de communication (102) et transmission des premières données de la première interface de communication (102) à un contrôleur (106) pour le traitement des premières données, et
détermination (204) d'au moins un paramètre pour la génération d'un modèle de correction d'erreurs pour la correction d'une erreur de position lors de la détermination d'une position pour le véhicule (122), sur la base des premières données reçues par le contrôleur (106).

14. Véhicule (122) avec un dispositif (100) pour utilisation dans un véhicule (122) pour la réception et le traitement de premières données selon l'une des revendications 1 à 11.

15. Véhicule (122) selon la revendication 14, le modèle de correction d'erreurs généré pendant une position de stationnement étant utilisable pendant un déplacement du véhicule (122) pour un système de navigation (124) disposé dans le véhicule, afin de réaliser une détermination de position optimisée du véhicule (122) pendant le déplacement du véhicule (122).
